# EUROPÄISCHE PATENTSCHRIFT

(11) **EP 2 844 447 B1**
(45) Veröffentlichungstag und Bekanntmachung des Hinweises auf die Patenterteilung: **12.10.2016**
(21) Anmeldenummer: 13713354.2
(22) Anmeldetag: 21.03.2013
(51) Int. Cl.: B29C 41/20, B29D 11/00, B29K 105/00, B29K 83/00, B29C 41/00

(54) **VERFAHREN ZUR HERSTELLUNG EINES OPTISCHEN MODULS MIT EINER SILIKONOPTIK, OPTICHES MODUL UND SEINE VERWENDUNG**
PROCESS FOR THE MANUFACTURE OF AN OPTICAL MODULE WITH SILICONE OPTICS, OPTICAL MODULE AND ITS USE
PROCÉDÉ DE FABRICATION D'UN MODULE OPTIQUE AVEC UNE OPTIQUE EN SILICONE, MODULE OPTIQUE ET SON UTILISATION

(30) Priorität: 02.05.2012 DE 102012008639
(43) Veröffentlichungstag der Anmeldung: 11.03.2015
(73) Patentinhaber: Heraeus Noblelight GmbH, 63450 Hanau (DE)
(72) Erfinder: PEIL, Michael, 64853 Otzberg (DE); SCHADT, Susanne, 63505 Langenselbold (DE); MAIWEG, Harald, 41352 Korschenbroich (DE); OSWALD, Florin, 60329 Frankfurt (DE)
(74) Vertreter: Heraeus IP
(86) Internationale Anmeldenummer: PCT/EP2013/000860
(87) Internationale Veröffentlichungsnummer: WO 2013/164052

(56) Entgegenhaltungen:
- EP-A1- 2 189 823
- EP-A2- 0 404 111
- WO-A1-2005/036221
- WO-A1-2012/031703
- DE-A1-102010 044 471
- US-A1- 2008 193 749

## Beschreibung

Die Erfindung betrifft ein Herstellungsverfahren für ein optisches Modul, umfassend das Überdecken einer ersten Oberfläche eines Substrats mit einem Silikon in einer offenen Gießform.

Die Erfindung betrifft zudem ein optisches Modul, umfassend ein Substrat mit einer ersten Oberfläche, und eine auf der ersten Oberfläche aufgebrachte Schicht aus Silikon, wobei in der Schicht aus Silikon ein optisches Element ausgebildet ist.

WO 2012/031703 A1 beschreibt ein Herstellungsverfahren für Chip-On-Board-Module, bei denen ein Substrat einen plattenförmigen Träger mit mehreren LEDs umfasst, wobei eine Oberfläche des Substrats in einer offenen Gießform überdeckend mit einer Schicht zur Ausbildung einer Optik versehen wird.

WO 2012/031703 A1 und DE 10 2010 044 471 A1 offenbaren ein Verfahren zur Beschichtung eines optoelektronischen Chip-On-Board-Moduls, das einen flächigen Träger umfasst, der mit einem oder mehreren optoelektronischen Komponenten bestückt ist, mit einer transparenten, UV- und temperaturbeständigen Beschichtung aus einem Silikon. Das Verfahren umfasst die Schritte des Vergießens eines flüssigen Silikons in eine nach oben offene Form, die Außenmaße aufweist, die den Außenmaßen des Trägers entsprechen oder diese übersteigen, des Einführens des Trägers in die Form, wobei die optoelektronische Komponente oder die optoelektronischen Komponenten vollständig in das Silikon eingetaucht werden und eine Oberfläche des Trägers das Silikon vollflächig berührt oder der Träger wenigstens teilweise vollflächig in das Silikon eintaucht, des Aushärtens und Vernetzens des Silikons mit den optoelektronischen Komponenten und dem Träger und der Entnahme des Trägers mit der Beschichtung aus dem ausgehärteten Silikon aus der Form.

WO 2005/036221 A1 offenbart ein Verfahren zur Herstellung einer elektrischoptischen Leiterplatte, aufweisend eine Anzahl Schichten mit elektrisch leitenden Elementen und mindestens eine optische Lage mit optisch leitenden Elementen, dadurch gekennzeichnet, dass die mindestens eine optische Lage ein Polysiloxanmaterial aufweist und die Strukturierung der Elemente der optischen Lage durch Gießtechniken erfolgt, wobei die mechanische Verbindung zwischen der optischen Lage und der mindestens einen Schicht der elektrisch leitenden Leiterplattenschichten im direkten Zusammenhang der Herstellung der optischen Lage vorgenommen wird.

EP2 189 823 A1 offenbart ein optisches Harz-Komposit-Element, umfassend ein Grundmaterial und eine Harzschicht, wobei die Harzschicht zumindest eine erste Harzschicht umfasst, die ein geformtes Produkt aus einem photohärtbaren Harz ist und die bei einer Dicke von 100 µm eine interne Transmission von nicht weniger als 85% für Licht der Wellenlänge 400 nm und von nicht mehr als 3% für Licht der Wellenlänge 360 nm aufweist.

US 2008/193749 A1 offenbart einen optischem Gegenstand umfassend eine photopolymerisierbare Zusammensetzung, die auf einer Hauptfläche eines Substrats angeordnet ist, wobei die photopolymerisierbare Zusammensetzung ein siliziumhaltiges Harz, welches Silizium-gebundenen Wasserstoff aufweist und aliphatisch ungesättigt ist, und einen Platinkatalysator umfasst.

EP 0 404 111 A2 offenbart ein Verfahren zur Herstellung einer Kunststofflinse, umfassend die Schritte des Bereitstellens einer Grundierungsschicht beinhaltend ein Polyurethan auf der Oberfläche eines Kunststofflinsensubstrates, des anschließenden Bereitstellens einer harten Überzugsschicht beinhaltend ein Silikonharz auf der Oberfläche der Grundierungsschicht, und des Abscheidens einer einschichtigen oder mehrschichtigen Antireflexionsbeschichtung auf der Oberfläche der harten Überzugsschicht durch Abscheiden eines anorganischen Materials.

Es ist die Aufgabe der Erfindung, ein Verfahren zur Herstellung eines optischen Moduls anzugeben, das eine hohe Flexibilität bei der Wahl eines verwendeten Silikons ermöglicht.

Diese Aufgabe wird gelöst durch ein Verfahren zur Herstellung eines optischen Moduls, umfassend die Schritte:
a. Bereitstellen eines Substrats mit einer ersten Oberfläche;
b. Bereitstellen einer offenen Gießform, wobei in der Gießform die Ausformung zumindest eines optischen Elements ausgebildet ist;
c. Beschichten der ersten Oberfläche mit einem Haftvermittler;
d. Überdecken der beschichteten Oberfläche mit einem Silikon in der offenen Gießform unter Ausbildung des optischen Elements aus dem Silikon;
e. Aushärten des Silikons in der Gießform.

Durch das Aufbringen eines Haftvermittlers auf die zu beschichtende Oberfläche des Substrats kann eine Beimengung von Hilfsstoffen zu dem Silikon in der Gießform vermieden oder verringert werden. Zudem steht eine größere Klasse von Silikonen für die Beschichtung zur Verfügung. Ein weiterer, vorteilhafter Effekt ist ein gutes Ablösen des ausgehärteten Silikons von der Gießform. Insbesondere kann dabei vorliegend auf eine Beschichtung der Gießform oder die Auslegung der Gießform mit einer Trennfolie verzichtet werden.

Unter einem optischen Element im Sinne der Erfindung ist jede Ausformung in der Schicht zu verstehen, die einen wohldefinierten Durchtritt von Licht, je nach Anforderungen auch im UV-Bereich und/oder im IR-Bereich, erlaubt. Bei bevorzugten Ausführungsformen kann es sich bei dem optischen Element insbesondere um eine Linse, zum Beispiel Sammellinse, Streulinse, Zylinderlinse, Fresnel-Linse oder Ähnliches handeln. Bei anderen Ausführungsformen kann das optische Element aber auch in einer Streuung des Lichts, einer Aufspaltung durch ein Prisma, oder Ähnlichem bestehen. Auch die Ausbildung von planparallelen Flächen zum einfachen Durchtritt des Lichts ist eine Optik im Sinne der Erfindung. Die polymere Schicht mit dem darin ausgeformten optischen Element bildet eine unmittelbar auf dem Substrat angeordnete Optik aus.

Das Überdecken des Substrats in der Gießform kann auf verschiedene Weise erfolgen. Entweder kann das Silikon zunächst in die Gießform verbracht werden, wonach das Substrat in das Silikon eingetaucht wird. Alternativ hierzu kann auch zunächst das Substrat in die zumindest teilweise leere Gießform eingesetzt werden, wonach das Silikon kontrolliert eingefüllt wird. In jedem Fall hat die Gießform bevorzugt Strukturen wie Stege, Nasen oder Ähnliches, an denen das Substrat aufliegt und positioniert wird.

Bei einem bevorzugten Ausführungsbeispiel enthält das Silikon keinen Haftvermittler als Beimischung. Hierdurch ist unter anderem eine besonders gute UV-Durchlässigkeit erzielbar.

Bevorzugt kann das Silikon einen Katalysator zur Einleitung eines Aushärtungsvorgangs enthalten. Zum Beispiel kann es sich dabei um sehr geringe Beimengungen an Platin oder ähnlichen Stoffen handeln. durch die katalytische induzierte Aushärtung kann eine hohe Reinheit des Silikons erzielt werden. Insbesondere bevorzugt erfolgt die Aushärtung des Silikons vorliegend nicht mittels UV-Licht, da in vielen Fällen gerade eine hohe Durchlässigkeit für UV-Licht gewünscht ist.

Weiterhin bevorzugt umfasst das Verfahren den Schritt eines Erwärmens des Silikons in der Gießform auf eine definierte Temperatur zur Einleitung und/oder Beschleunigung einer Aushärtung. Zum Beispiel kann eine katalytisch induzierte Aushärtung durch Erwärmen beschleunigt werden, was das Verfahren effektiver macht und die notwendige Katalysatormenge weiter reduziert. Es sind aber auch Aushärtungen denkbar, die ausschließlich durch erhöhte Temperatur erfolgen. Typische definierte Temperaturen liegen unterhalb von Bereichen, in denen eine Versprödung oder sonstige Degeneration des Silikons zu erwarten ist. Beispielhafte Temperaturbereiche liegen bei etwa 100 °C, bevorzugt bei weniger als 140 °C. Die definierte Temperatur hängt unter anderem auch davon ab, welche Temperaturen mit dem Substrat kompatibel sind.

Bei einer besonders bevorzugten Ausführungsform ist es vorgesehen, dass das Silikon unmittelbar vor einem Einbringen in die Gießform als Gemisch zumindest zweier Silikone ausgebildet wird. Solche zwei- oder mehrkomponentigen Systeme sind am Markt erhältlich, wobei durch die Mischung zweier insbesondere hochreiner Silikone wiederum ein hochreines Silikon erhalten wird, bei dem jedoch durch die Mischung ein Aushärtungsvorgang bzw. eine Vernetzung gestartet wird. So kann zum Beispiel eines der beiden Silikone so ausgelegt sein, dass es einen Katalysator zur Aushärtung des Gemisches enthält, der dieses Silikon allein aber nicht vernetzt.

Allgemein vorteilhaft ist das Silikon hochrein und enthält weniger als 100 ppm an Fremdstoffen. Besonders bevorzugt beträgt der Gehalt an Fremdstoffen weniger als 10 ppm. Unter Fremdstoffen sind dabei sämtliche organischen oder sonstigen Beimengungen bis auf einen Katalysator zu verstehen, die nicht zu dem vernetzten, ausgehärteten Silikonsystem an sich gehören. Ein Beispiel für unerwünschte Fremdstoffe sind beigemengte Haftvermittler. Allgemein werden als unerwünschte Fremdstoffe auch Komponenten angesehen, die Kohlenstoff-Kettenbindungen aufweisen. Solche Bindungen sind regelmäßig nicht UV-stabil. Ein erfindungsgemäß gewünschtes Silikon weist daher zumindest nach der Aushärtung allenfalls einzelne Kohlenstoff-Atome auf, zum Beispiel in Form von Methyl-Restgruppen. Durch die hohe Reinheit des Silikons kann insbesondere eine besonders hohe UV-Beständigkeit erzielt werden. Dies betrifft nicht nur eine mechanische Beständigkeit des Silikons, sondern auch eine optische Beständigkeit, da bei Vorliegen bereits geringer Verunreinigungen ein frühzeitiges Vergilben des UV-bestrahlten Silikons auftritt.

Zur Minimierung nachteiliger Effekte im Bereich des Übergangs vom Substrat auf das Silikon ist bevorzugt vorgesehen, dass der Haftvermittler in einer mittleren Schichtdicke von weniger als 100 nm auf die Oberfläche aufgebracht wird. Dabei ist für die optischen Eigenschaften unter anderem wünschenswert, dass eine Schichtdicke des Haftvermittlers unterhalb einer halben Wellenlänge des durch das optische Element tretenden Lichts liegt. Weiter bevorzugt beträgt die Schichtdicke weniger als 10 nm, insbesondere nicht mehr als 10 Monolagen. Aufgrund der Funktion des Haftvermittlers ist die Aufbringung von nur einer Monolage ideal und gewünscht.

Ein Auftrag des Haftvermittlers auf das Substrat kann auf geeignete Weise erfolgen, zum Beispiel durch Eintauchen, Aufdampfen, Auftropfen, Aufsprühen oder mittels Rotationsbeschichtung. Besonders bevorzugt erfolgt nach dem Auftrag eine Ausdünnung der aufgetragenen Schicht, zum Beispiel durch Abblasen überschüssigen Haftvermittlers.

Der Haftvermittler ist bevorzugt selber UV-stabil. Eine Degenerierung des Haftvermittlers durch UV-Strahlung kann zumindest dann toleriert werden, wenn die Schicht ausreichend dünn ist. Haftvermittler für Silikone sind allgemein bekannt und hängen vom jeweilig zu verwendenden Substrat ab. Häufig haben Haftvermittler Moleküle mit einer ersten Endgruppe, die an dem Substrat anbindet und einer zweiten Endgruppe, die an dem Silikon anbindet. Bevorzugt handelt es sich um einen Haftvermittler, der an dem Silikon über chemische Bindungen anbindet. An dem Substrat kann der Haftvermittler je nach Umständen chemisch und/oder physikalisch anbinden, zum Beispiel über Adhäsion oder van-der-Waals-Kräfte. Typische Haftvermittler bestehen aus einem Gemisch aus reaktiven Siloxanen und Siliziumharzen. Insbesondere können die Endgruppen entsprechend dem Substrat optimiert sein.

Zur Optimierung des offenen Gießverfahrens ist es vorgesehen, dass das Silikon vor einer Aushärtung eine Viskosität von weniger als 1000 mPa*s aufweist. Bevorzugt beträgt die Viskosität weniger als 100 mPa*s, besonders bevorzugt weniger als 50 mPa*s. Diese niedrigen Viskositäten erlauben eine blasenfreie und schnelle Füllung der Gießform und insbesondere ein blasenfreies Bedecken des Substrats. Dabei kann zum Beispiel überschüssiges Silikon, das von dem eingetauchten Substrat verdrängt wird, leicht an einem Überlauf abfließen.

Allgemein vorteilhaft ist es vorgesehen, dass das ausgehärtete Silikon eine Härte im Bereich von 10 bis 90 Shore A aufweist. Besonders bevorzugt liegt die Härte im Bereich von 50 bis 75 Shore A. Hierdurch ist eine ausreichende mechanische Stabilität gegeben, um eine genaue Formgebung auch einer anspruchsvollen Optik sicher zu stellen. Zugleich bietet die Beschichtung durch ihre hohe Elastizität einen sehr guten Schutz vor mechanischen Einwirkungen wie Stößen, Vibrationen oder thermisch bedingten mechanischen Verspannungen.

Bei einer allgemein bevorzugten Ausführungsform ist es vorgesehen, dass das aus Silikon bestehende optische Element eine dauerhafte UV-Beständigkeit gegenüber Bestrahlungsstärken von mehr als 1 W/cm² im Bereich von weniger als 400 nm Wellenlänge aufweist. Besonders bevorzugt kann die Beständigkeit auch gegenüber Bestrahlungsstärken von mehr als 10 W/cm² bestehen. Es hat sich gezeigt, dass insbesondere hochreines Silikon ein sehr gutes Material zur Verwendung mit UV-Strahlung darstellt. Unter dauerhafter Beständigkeit ist dabei zu verstehen, dass die Bestrahlung über einen langen Zeitraum von wenigstens einigen Monaten anliegen kann, ohne dass das Silikon merklich degeneriert oder verfärbt bzw. ausgilbt. Die bevorzugte UV-Beständigkeit eines erfindungsgemäßen Moduls liegt somit erheblich über einer üblichen UV-Beständigkeit von Material gegenüber Sonneneinstrahlung, die als rund 0,15 W/cm² abgeschätzt werden kann.

Bei einer bevorzugten Ausführungsform der Erfindung umfasst das Substrat einen Träger mit zumindest einer LED. Besonders bevorzugt ist dabei das optische Element unmittelbar auf der LED angeordnet ist. Zu solchen Modulen wird allgemein auf die Druckschrift WO 2012/031703 verwiesen. Bei dem Substrat kann es sich insbesondere um ein Chip-On-Board-Modul (COB) mit mehreren LEDs und eventuell weiteren elektronischen Bauteilen handeln. Die LEDs können insbesondere im UV-Bereich abstrahlen. Die Peakwellenlänge der bevorzugt, aber nicht notwendig verwendeten LEDs liegt im Bereich von 350 bis 450nm. Bevorzugte Unterbereiche sind 365±5nm, 375±5nm, 385±5nm, 395±5nm und 405±5nm. Die spektrale Halbwertbreite einer LED liegt typischerweise im Bereich von 20 bis 30nm. An der Basis kann die spektrale Breite 50 bis 70 oder mehr nm betragen. Insgesamt kann durch das erfindungsgemäße Verfahren ein LED-Modul mit einer materialeinheitlich einstückig aufgebrachten Primäroptik der LEDs bereitgestellt werden. Das LED-Modul strahlt dabei besonders bevorzugt im UV-Bereich ab.

Solche LED-Module können hohe Strahlungsintensität insbesondere im UV-Bereich erzeugen. Sie können bevorzugt zum Bau von Leuchten verwendet werden, die hohe Bestrahlungsdichten in eine definierte Struktur bündeln. Eine besonders bevorzugte Verwendung besteht für den Bau von Vorrichtung zur Trocknung von Beschichtungen. Solche Vorrichtungen können etwa für die Trocknung von Lacken bei Druckverfahren, insbesondere Offset-Druckverfahren, verwendet werden.

Bei einem weiteren Ausführungsbeispiel ist es vorgesehen, dass das Substrat einen lichtdurchlässigen Träger aufweist, wobei der Träger und das optische Element zusammen eine Optik ausbilden. Bei einer solchen Optik kann der Träger im Prinzip aus demselben oder einem anderen Material bestehen als die aufgebrachte Schicht. Bevorzugt besteht der Träger zum Beispiel aus einem Glas. Es kann sich insbesondere um UV-durchlässiges Glas handeln, zum Beispiel Quarzglas.

Bei einer weiteren bevorzugten Ausführungsform ist es vorgesehen, dass zudem nach Schritt e eine zweite Oberfläche beschichtet wird, wobei die Beschichtung der zweiten Oberfläche ebenfalls die Verfahrensschritte a bis e umfasst. So kann zum Beispiel eine Optik mit zwei gleich oder verschieden geformten Schichtseiten auf einem zentralen Träger, zum Beispiel einer Glasplatte, hergestellt werden. Es ist auch denkbar, ein Modul mit LEDs auf diese Weise zweiseitig zu beschichten. Dabei können entweder auf beiden Seiten LEDs vorliegen oder die Beschichtung auf der zweiten Seite dient nur einem Schutz des Moduls z.B. vor Stößen, dem Eindringen von Wasser oder Ähnlichem.

Die zweite Oberfläche kann dabei entweder eine zweite Oberfläche des Substrats sein, zum Beispiel im Fall der Beschichtung einer der ersten Beschichtung gegenüberliegenden Substratseite, oder auch eine andere Oberfläche. Insbesondere kann es sich um eine äußere Oberfläche der ersten Beschichtung handeln, auf die dann in erneuter Anwendung des Verfahrens eine zweite Beschichtung aufgebracht wird. Je nach Anforderungen kann die zweite Schicht unmittelbar auf die erste Schicht aufgebracht werden. Alternativ hierzu kann die zweite Oberfläche auch zu einer Zwischenschicht wie einer Vergütung, Metallbedampfung etc. gehören, die zum Beispiel zunächst auf die erste Beschichtung aufgebracht wird.

Die Aufgabe der Erfindung wird zudem gelöst durch ein optisches Modul, umfassend ein Substrat mit einer ersten Oberfläche, und eine auf der ersten Oberfläche aufgebrachte Schicht aus Silikon, wobei in der Schicht aus Silikon ein optisches Element mittels eines offenen Gießverfahrens ausgebildet ist, wobei zwischen der ersten Oberfläche und der Schicht aus Silikon eine Schicht aus einem Haftvermittler angeordnet ist dadurch gekennzeichnet, dass das Silikon hochrein ist und weniger als 100 ppm an Fremdstoffen enthält. Durch das Vorsehen der Schicht aus einem Haftvermittler ist eine gute und vollflächige Verbindung des Silikons mit dem Substrat ermöglicht.

Bevorzugt umfasst ein erfindungsgemäßes optisches Modul zudem eines oder mehrere Merkmale nach einem der Ansprüche 1 bis 13. Insbesondere kann das optische Modul nach einem erfindungsgemäßen Verfahren hergestellt sein. Grundsätzlich kann es aber auch nach einem abweichenden Verfahren hergestellt sein.

Die Aufgabe der Erfindung wird zudem gelöst durch eine Leuchte, umfassend ein erfindungsgemäßes optisches Modul.

Erfindungsgemäß wird eine solche Leuchte bevorzugt zur Trocknung einer Schicht verwendet. Dabei kann es sich bevorzugt um die Verwendung in einem Druckverfahren handeln.

Weitere Vorteile und Merkmale der Erfindung ergeben sich aus dem nachfolgend beschriebenen Ausführungsbeispiel sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Schnittansicht durch ein erstes Ausführungsbeispiel eines erfindungsgemäßen Moduls.
- Fig. 2: zeigt zwei Darstellungen einer offenen Gießform und eines Substrats im Zuge der erfindungsgemäßen Herstellung eines optischen Moduls.
- Fig. 3: zeigt eine Abwandlung der Gießform aus Fig. 2.
- Fig. 4: zeigt Schnittansichten von drei Abwandlungen eines optischen Moduls einer zweiten Ausführungsform der Erfindung.
- Fig. 5: zeigt eine erste Weiterbildung eins Moduls nach Fig. 4.
- Fig. 6: zeigt eine zweite Weiterbildung eines Moduls nach Fig. 4.
- Fig. 7: zeigt ein Beispiel einer Verwendung eines Moduls nach Fig. 4.
- Fig. 8: zeigt ein Beispiel einer kombinierten Verwendung verschiedener Ausführungsbeispiele der Erfindung.

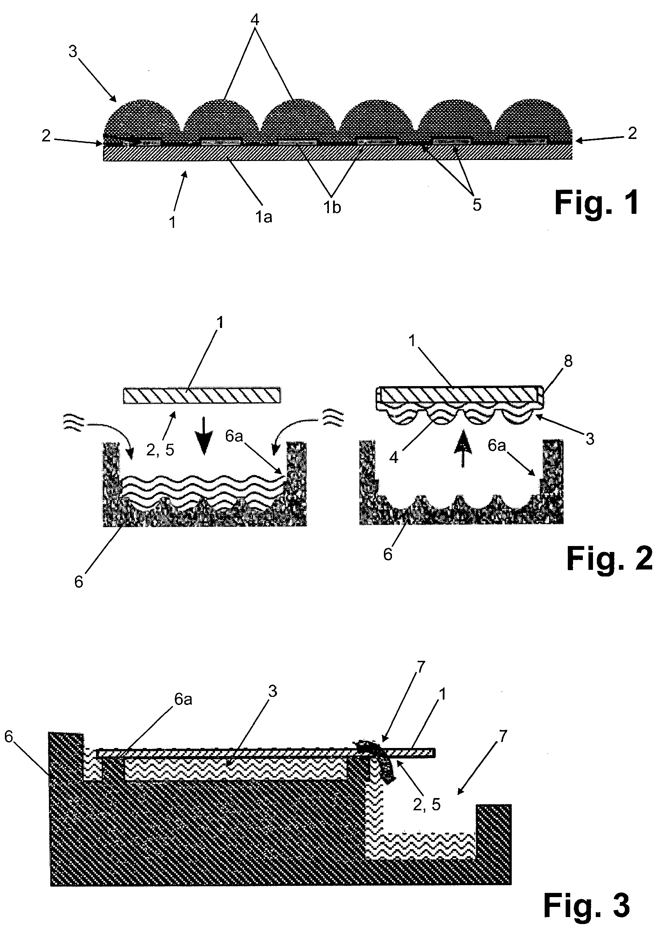

Ein optisches Modul nach Fig. 1 umfasst ein Substrat 1, auf dem eine Schicht aus einem Haftvermittler 2 aufgebracht ist. Auf dem Haftvermittler 2 ist eine geformte Schicht 3 aus Silikon aufgebracht, die vorliegend eine Mehrzahl von optischen Elementen 4 in Form von Sammellinsen umfasst.

Das Substrat 1 besteht hier aus einem Chip-On-Board-Modul (COB) mit einem Träger 1a, auf dem mehrere LEDs 1 b angeordnet sind. Der Haftvermittler 2 bedeckt eine erste Oberfläche 5 des Substrats, die teilweise aus einer Oberfläche des Trägers 1 a und teilweise aus Oberflächen der LEDs 1 b und weiterer Bauteile (nicht dargestellt) besteht.

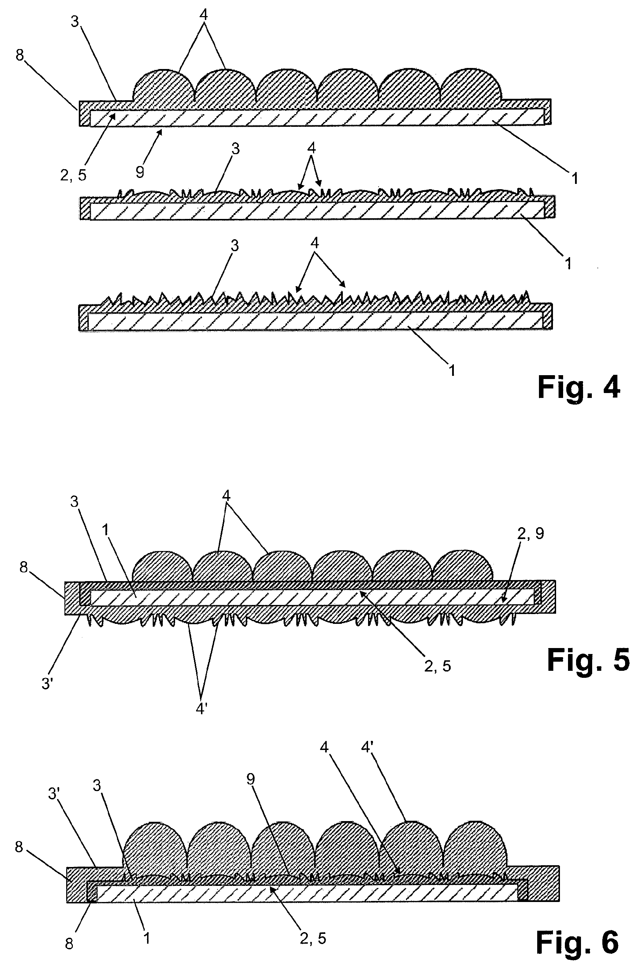

Bei anderen Ausführungsbeispielen der Erfindung gemäß Fig. 4 bis Fig. 6 besteht das Substrat nicht aus einem LED-Modul, sondern aus einem lichtdurchlässigen Träger 1, vorliegend einer Glasplatte. Der Träger 1 bildet zusammen mit einer oder mehrerer analog zum ersten Beispiel aufgebrachten Silikonschichten 3, 3' mit darin ausgebildeten optischen Elementen 4, 4'eine Optik 10 aus. Vorliegend sind die Substrate bzw. lichtdurchlässigen Träger 1 jeweils als Platten mit planparallelen Oberflächen dargestellt. Je nach Anforderungen kann aber auch der Träger optische Elemente wie z.B. Linsen umfassen.

Bei dem oberen Beispiel nach Fig. 4 sind die optischen Elemente 4 analog zu dem ersten Ausführungsbeispiel als Sammellinsen ausgebildet.

Bei dem mittleren Beispiel nach Fig. 4 sind die optischen Elemente 4 als Fresnel-Linsen ausgebildet.

Bei dem unteren Beispiel nach Fig. 4 ist das optische Element 4 als quasi-zufällige Ansammlung lichtbrechender Strukturen bzw. Ausformungen ausgebildet, wodurch ein Streueffekt erzielt wird.

Die Schichten 3, 3' bestehen jeweils aus einem hochreinen Silikon mit einer Härte von etwa 65 Shore A. Das Silikon ist farblos und transparent. Es ist im Wellenlängenbereich von etwa 300 nm bis etwa 1000 nm hochgradig durchlässig. Es ist UV-beständig gegen eine dauerhafte Bestrahlung mit Wellenlängen von unter 400 nm und einer Energiedichte von mehr als 10 Watt/cm².

Die Herstellung eines der vorstehend beschriebenen optischen Module erfolgt jeweils nach folgendem Verfahren:

Zunächst wird eine offene Gießform 6 (siehe Fig. 2) bereit gestellt, die unter anderem die Negativformen der Ausformungen für die optischen Elemente 4 enthält. Ferner sind in der Form 6 Auflagen 6a in Form von Stegen oder Nasen zur positionierten Auflage des Substrats 1 vorgesehen.

Sodann wird das Substrat 1 auf seiner zu beschichtenden Oberfläche 5, gegebenenfalls nach einem Reinigungsschritt, mit einem Haftvermittler 2 beschichtet. Die Beschichtung erfolgt zum Beispiel durch Auftropfen und Abblasen überschüssiger Substanz, wodurch zugleich eine Trocknung des verbleibenden Haftvermittlers erfolgt. Im Idealfall beträgt die Dicke des aufgetragenen Haftvermittlers nur eine Monolage, in jedem Fall bevorzugt aber weniger als 100 nm.

Sobald das Substrat auf diese Weise präpariert ist, wird ein Silikongemisch aus zwei Komponenten hergestellt und in die offene Gießform eingebracht. Dabei enthält die eine Komponente einen Katalysator und die andere Komponente einen Vernetzer. Das Gemisch hat eine Viskosität von vorliegend weniger als 50 mPa*s. Durch die Vermischung der Komponenten beginnt im Prinzip der Vorgang der Aushärtung, der aber bei niedrigen Temperaturen wie etwa Raumtemperatur recht langsam verläuft.

Nachfolgend wird das Substrat kontrolliert mit der beschichteten Oberfläche 5 nach unten in die Gießform eingebracht und in das Silikongemisch eingetaucht (siehe Fig. 2, linke Seite).

Dabei kann insbesondere ein Überlauf 7 an der Gießform vorgesehen sein, wie in Fig. 3 schematisch dargestellt. Dieser sorgt in Verbindung mit der niedrigen Viskosität des Silikons dafür, dass eine Eintauchtiefe des Substrats gut definiert ist und insbesondere vom Substrat verdrängtes Silikon abfließen kann. Auf diese Weise kann zum Beispiel bei Bedarf sichergestellt werden, neben der Oberfläche 5 des Substrats auch die Stirnseiten des Substrats mit einem umlaufenden Rand 8 der Schicht 3 bedeckt werden, eine Rückseite 9 des Substrats aber nicht beschichtet wird. Bei anderen Ausführungsformen kann aber auch eine vollständige Ummantelung des Substrats gewünscht sein.

Der Rand 8 hat einerseits eine Schutzfunktion für das Trägersubstrat 1, bei Halterung an dessen Rand oder modularer Anreihung dieser Optiken auf Stoß, und er ermöglicht eine direkte, lückenlose, transparente Anreihung der Substrate und somit eine Minimierung der Lichtablenkung an den optischen Grenzflächen zwischen zwei Trägersubstraten.

Nachdem das Substrat auf den Auflagen 6a positioniert ist, wird bei Bedarf noch kontrolliert, ob die Benetzung der Oberfläche 5 vollständig und insbesondere ohne Luftblasen erfolgt ist. Bei einer möglichen Weiterbildung der Erfindung kann das Eintauchen des Substrats auch in einem Vakuum erfolgen, um die Problematik von Luftblasen zu verringern. Allgemein ist aber aufgrund der niedrigen Viskosität auch ohne Vakuum eine blasenfreie Beschichtung erzielbar.

Nach der Positionierung erfolgt die Aushärtung bzw. Vernetzung des Silikons. Diese wird zweckmäßig durch eine Temperaturerhöhung erheblich beschleunigt. Bei einer Temperatur von etwa 100 °C kann die Aushärtung in typisch einer halben Stunde erfolgen. Bei Temperaturen im Bereich von 150 °C kann die Aushärtung typisch in wenigen Minuten erfolgen. Bei der Wahl der Temperatur für diese thermische Aushärtung sind auch die Eigenschaften des jeweiligen Substrates zu berücksichtigen.

Sobald das Silikon ausgehärtet ist, kann das nun beschichtete Substrat aus der wiederverwendbaren Gießform entnommen werden, siehe rechte Abbildung in Fig. 2.

Da vorliegend ein hochreines Silikon ohne Beimengung von Haftvermittlern in dem Silikon verwendet wird, sind auch keine weiteren Maßnahmen zur Trennung des Silikons 3 von der Form 6 erforderlich. Insbesondere wird auf die Auslegung der Gießform mit einer Trennfolie oder Ähnliches verzichtet. Hierdurch wird die Herstellung vereinfacht und ein sehr genauer Abguss der Strukturen der Gießform wird ermöglicht.

Das vorstehend beschriebene Verfahren kann bei bedarf mehrfach hintereinander auf dasselbe Objekt angewendet werden. Fig. 5 und Fig. 6 zeigen Ausführungsformen der Erfindung, die jeweils solche Weiterbildungen von Beispielen aus Fig. 4 darstellen. Dabei wurde jeweils nach dem Herstellen einer ersten Schicht 3 mit optischen Elementen 4 eine zweite Schicht 3' mit optischen Elementen 4' hergestellt.

Im Fall des Beispiels nach Fig. 5 wurde die zweite Schicht 3' auf die Rückseite bzw. gegenüberliegende Seiten des vorliegend als flache Platte ausgebildeten Substrats 1 aufgebracht. Hierzu muss lediglich das Substrat auf der noch unbeschichteten Seite 9 mit einem Haftvermittler 2 versehen werden und dann voran in eine entsprechende Gießform 6 eingebracht werden. Die weiteren Verfahrensschritte erfolgen wie vorstehend beschrieben.

In dem gezeigten Beispiel Fig. 5 ist zu Illustrationszwecken die erste Oberfläche 5 bzw. die Vorderseite des Substrats 1 mit einer Mehrzahl von Sammellinsen 4 beschichtet worden. Die zweite Oberfläche 9 bzw. Rückseite des Substrats 1 wurde mit Fresnel-Linsen 4' beschichtet, die jeweils mit den Sammellinsen 4 ausgerichtet sind.

Bei dem in Fig. 6 gezeigten Beispiel wurde zunächst eine Schicht 3, vorliegend mit Fresnel-Linsen, auf die erste Oberfläche 5 bzw. die Vorderseite des Substrats aufgebracht. Nachfolgend wurde auf diese Schicht 3 ein Haftvermittler 2 aufgebracht und eine zweite Schicht 3' mit Sammellinsen 4' wurde auf die erste Schicht 3 aufgebracht. In diesem Fall stellt die erste aufgebrachte Schicht 3 das Substrat im Sinne der Erfindung dar, und ihre äußere Oberfläche ist die zweite Oberfläche 9.

Im Prinzip sind Anzahl und Ausgestaltung solcher mehrfachen Schichten keine Grenzen gesetzt.

Die Schichten können auch eine unterschiedliche Zusammensetzung des Vergussmaterials aufweisen, insbesondere unterschiedlichen Vergussmaterialien und/oder Beimischungen zu den Vergussmaterialien. So können verschiedene Eigenschaften miteinander kombiniert werden, oder die optischen Eigenschaften beim Aufbringen vieler Schichten nahezu graduell beeinflusst werden, z.B. durch leichte Veränderung des Brechungsindexes des eingesetzten Vergussmaterials. Ebenso kann die aktuell abschließende Grenzschicht vor der Aufbringung der nächsten Schicht beeinflusst und verändert werden, z.B. durch
Silanisierung einer Silikongrenzschicht, einer dielektrischen oder metallischen Beschichtung durch Sputtern, Besprühen, Benetzen, oder weiteren gängigen Oberflächenbeschichtungsverfahren.

Vorstehend wird die Verwendung von besonders reinem Silikon als bevorzugt genannt, um insbesondere hohe Transmissionen und Materialbeständigkeit in kritischen Wellenlängenbereichen zu optimieren. Grundsätzlich kann aber das Vergussmaterial mit optisch wirksamen Materialien gefüllt werden, um so weitere optische Funktionalitäten zu erzeugen, wie z.B. Konversion der Lichtwellenlänge mittels der Einbringung von phosphoreszierenden und fluoreszierenden Stoffen, wie z.B. seltene Erden, oder zur Beeinflussung der Opazität der Optik mittels Einbringung streuender Stoffen, wie z.B. transparenter oder transluzenter Partikel (z.B. aus Glas, oder Keramik) oder metallischen Partikel.

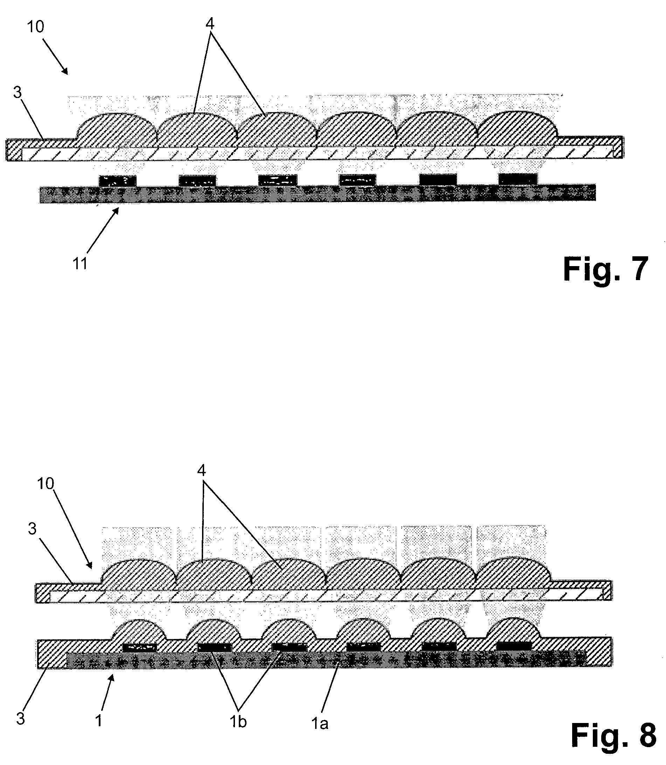

Fig. 7 zeigt eine bevorzugte Verwendung einer vorstehend beschriebenen Optik 10 in Verbindung mit einer flächigen Lichtquelle. Die Lichtquelle ist hier als LED-Modul 11 mit einer Anzahl von in einem Raster angeordneten LEDs ausgebildet. Die Optik ist beabstandet vor der Lichtquelle angeordnet und bricht auf gewünschte Weise das Licht der einzelnen LEDs, vorliegend durch jeweils einer LED zugeordnete Sammellinsen.

Fig. 8 zeigt eine weitere bevorzugte Verwendung, bei der ein erfindungsgemäßes Modul nach Fig. 1 mit einem erfindungsgemäßen Modul nach Fig. 4 kombiniert ist. Dabei liegt insgesamt ein erstes optisches Modul vor, das als LED-Modul 1, 1 a, 1 b mit einer Primäroptik 3 ausgebildet ist.

Dem ersten optischen Modul ist ein als Optik 10 ausgebildetes, zweites optisches Modul vorgelagert. Vorliegend weisen beide Module jeweils mehrere, mit den LEDs korrelierte Sammellinsen auf, die in Zusammenwirkung insgesamt einen großen Öffnungswinkel der LEDs transportieren.

## Patentansprüche

1. Verfahren zur Herstellung eines optischen Moduls, umfassend die Schritte:
a. Bereitstellen eines Substrats (1) mit einer ersten Oberfläche (5);
b. Bereitstellen einer offenen Gießform (6), wobei in der Gießform die Ausformung zumindest eines optischen Elements (4, 4') ausgebildet ist;
c. Beschichten der ersten Oberfläche (5) mit einem Haftvermittler (2);
d. Überdecken der beschichteten Oberfläche (2, 5) mit einem Silikon (3) in der offenen Gießform unter Ausbildung des optischen Elements aus dem Silikon (3);
e. Aushärten des Silikons in der Gießform

2. Verfahren nach Anspruch 1, **dadurch gekennzeichnet, dass** das Silikon (3) keinen Haftvermittler als Beimischung enthält.

3. Verfahren nach einem der vorhergehenden Ansprüche, **dadurch gekennzeichnet, dass** das Silikon (3) einen Katalysator zur Einleitung eines Aushärtungsvorgangs enthält.

4. Verfahren nach einem der vorhergehenden Ansprüche, umfassend den Schritt:
Erwärmen des Silikons (3) in der Gießform auf eine definierte Temperatur zur Einleitung und/oder Beschleunigung einer Aushärtung.

5. Verfahren nach einem der vorhergehenden Ansprüche, **dadurch gekennzeichnet, dass** das Silikon (3) unmittelbar vor einem Einbringen in die Gießform als Gemisch zumindest zweier Silikone ausgebildet wird.

6. Verfahren nach einem der vorhergehenden Ansprüche, **dadurch gekennzeichnet, dass** das Silikon (3) hochrein ist und weniger als 100 ppm an Fremdstoffen enthält.

7. Verfahren nach einem der vorhergehenden Ansprüche, **dadurch gekennzeichnet, dass** der Haftvermittler (2) in einer mittleren Schichtdicke von weniger als 100 nm auf die Oberfläche (5) aufgebracht wird.

8. Verfahren nach einem der vorhergehenden Ansprüche, **dadurch gekennzeichnet, dass** das Silikon (3) vor einer Aushärtung eine Viskosität von weniger als 1000 mPa*s aufweist.

9. Verfahren nach einem der vorhergehenden Ansprüche, **dadurch gekennzeichnet, dass** das ausgehärtete Silikon (3) eine Härte im Bereich von 10 bis 90 Shore A aufweist.

10. Verfahren nach einem der vorhergehenden Ansprüche, **dadurch gekennzeichnet, dass** das aus Silikon (3) bestehende optische Element (3) eine dauerhafte UV-Beständigkeit gegenüber Bestrahlungsstärken von mehr als 1 W/cm² im Bereich von weniger als 400 nm Wellenlänge aufweist.

11. Verfahren nach einem der vorhergehenden Ansprüche, **dadurch gekennzeichnet, dass** das Substrat einen Träger (1 a) mit zumindest einer LED (1 b) umfasst.

12. Verfahren nach einem der Ansprüche 1 bis 10, **dadurch gekennzeichnet, dass** das Substrat einen lichtdurchlässigen Träger (1) aufweist, wobei der Träger (1) und das optische Element (4, 4') zusammen eine Optik (10) ausbilden.

13. Verfahren nach einem der vorhergehenden Ansprüche, umfassend den Schritt:
Beschichten einer zweiten Oberfläche (9) nach Schritt e, wobei die Beschichtung der zweiten Oberfläche (9) ebenfalls die Verfahrensschritte a bis e umfasst.

14. Optisches Modul, umfassend ein Substrat (1) mit einer ersten Oberfläche (5), und eine auf der ersten Oberfläche (5) aufgebrachte Schicht (3) aus Silikon,
wobei in der Schicht (3) aus Silikon ein optisches Element (4) mittels eines offenen Gießverfahrens ausgebildet ist,
wobei zwischen der ersten Oberfläche (5) und der Schicht (3) aus Silikon eine Schicht aus einem Haftvermittler (2) angeordnet ist
**dadurch gekennzeichnet, dass** das Silikon (3) hochrein ist und weniger als 100 ppm an Fremdstoffen enthält.

15. Optisches Modul nach Anspruch 14, ferner hergestellt nach einem der Ansprüche 1 bis 13.

16. Leuchte, umfassend ein optisches Modul nach Anspruch 14 oder 15.

17. Verwendung einer Leuchte nach Anspruch 16 zur Trocknung einer Schicht, insbesondere in einem Druckverfahren.

## Claims

1. A method for producing an optical module, comprising the following steps:
a. providing a substrate (1) having a first surface (5);
b. providing an open casting mould (6), wherein the moulding of at least one optical element (4, 4') is formed in the casting mould;
c. coating a first surface (5) with an adhesion promoter (2);
d. covering the coated surface (2, 5) with a silicone (3) in the open casting mould with the optical element being formed from the silicon (3);
e. hardening the silicone in the casting mould.

2. The method according to Claim 1, **characterised in that** the silicone (3) does not contain any adhesion promoter as an admixture.

3. The method according to any one of the preceding claims, **characterised in that** the silicone (3) contains a catalyst for initiating the hardening process.

4. The method according to any one of the preceding claims, comprising the following step:
heating the silicone (3) in the casting mould to a defined temperature for initiating and/or accelerating a hardening process.

5. The method according to any one of the preceding claims, **characterised in that**, prior to being put into the casting mould, the silicone (3) is formed as a mixture of at least two silicones.

6. The method according to any one of the preceding claims, **characterised in that** the silicone (3) is of high purity and contains less than 100 ppm of foreign matter.

7. The method according to any one of the preceding claims, **characterised in that** the adhesion promoter (2) is applied to the surface (5) in an average coat thickness of less than 100 nm.

8. The method according to any one of the preceding claims, **characterised in that**, prior to a hardening process, the silicone (3) comprises a viscosity of less than 1000 mPa*s.

9. The method according to any one of the preceding claims, **characterised in that** the hardened silicone (3) comprises a hardness within a range from 10 to 90 Shore A.

10. The method according to any one of the preceding claims, **characterised in that** the optical element (3) that consists of silicone (3) comprises a permanent UV resistance to irradiation intensities of more than 1 W/cm² within a wavelength range of less than 400 nm.

11. The method according to any one of the preceding claims, **characterised in that** the substrate comprises a carrier (1 a) having at least one LED (1 b).

12. The method according to any one of Claims 1 to 10, **characterised in that** the substrate comprises a light-transmissive carrier (1), wherein the carrier (1) and the optical element (4, 4') together form an optical system (10).

13. The method according to any one of the preceding claims, comprising the following step:
coating a second surface (9) subsequent to step 3, wherein the coating of the second surface (9) also comprises the method steps a to e.

14. An optical module, comprising a substrate (1) having a first surface (5) and a coat (3) that is made of silicone and has been applied to the first surface (5),
wherein an optical element (4) is formed in the coat (3) made of silicone by means of an open casting method,
wherein a coat made of an adhesion promoter (2) is arranged between the first surface (5) and the coat (3) made of silicone,
**characterised in that** the silicone (3) is of high purity and contains less than 100 ppm of foreign matter.

15. The optical module according to Claim 14, further produced according to any one of Claims 1 to 13.

16. A lighting fixture, comprising an optical module according to Claim 14 or 15.

17. A use of a lighting fixture according to Claim 16 for drying a coat, in particular in a printing process.

## Revendications

1. Procédé de production d'un module optique, comprenant les étapes suivantes :
a. Mettre à disposition un substrat (1) présentant une première surface (5) ;
b. Mettre à disposition un moule (6) ouvert dont la configuration permet de mouler au moins un élément optique (4, 4') ;
c. Revêtir la première surface (5) d'un promoteur d'adhérence (2) ;
d. Recouvrir la surface revêtue (2, 5) avec un silicone (3) dans le moule ouvert, de manière à former l'élément optique à partir du silicone (3) ;
e. Durcissement du silicone dans le moule.

2. Procédé selon la revendication 1, **caractérisé en ce, que** le silicone (3) ne contienne pas d'agent d'accrochage intégré dans sa composition.

3. Procédé selon l'une des revendications précédentes, **caractérisé en ce, que** le silicone (3) contienne un catalyseur pour déclencher une opération de durcissement.

4. Procédé selon l'une des revendications précédentes, comprenant l'étape :
chauffage du silicone (3) dans le moule jusqu'à l'atteinte d'une température définie pour le déclenchement et/ou l'accélération d'un durcissement.

5. Procédé selon l'une des revendications précédentes, **caractérisé en ce, que** avant son introduction imminente dans le moule, le silicone (3) soit formé en tant que mélange d'au moins deux silicones.

6. Procédé selon l'une des revendications précédentes, **caractérisé en ce, que** le silicone (3) soit ultrapur et contienne moins de 100 ppm de substances étrangères.

7. Procédé selon l'une des revendications précédentes, **caractérisé en ce, que** le promoteur d'adhérence (2) soit appliqué sur la surface (5) avec épaisseur de couche moyenne inférieure à 100 nm.

8. Procédé selon l'une des revendications précédentes, **caractérisé en ce, que** le silicone (3) présente une viscosité inférieure à 1000 mPa*s avant le durcissement.

9. Procédé selon l'une des revendications précédentes, **caractérisé en ce, que** le silicone (3) durci présente une dureté située dans une plage de 10 à 90 Shore A.

10. Procédé selon l'une des revendications précédentes, **caractérisé en ce, que** l'élément optique (3) en silicone (3) possède une résistance aux rayons UV durable par rapport à des irradiances de plus de 1 W/cm² dans une plage de longueur d'onde inférieure à 400 nm.

11. Procédé selon l'une des revendications précédentes, **caractérisé en ce, que** le substrat comporte un support (1 a) avec au moins une LED (1 b).

12. Procédé selon l'une des revendications 1 à 10, **caractérisé en ce, que** le substrat comporte un support (1) perméable à la lumière, le support (1) et l'élément optique (4, 4') formant ensemble un système optique (10).

13. Procédé selon l'une des revendications précédentes, comprenant l'étape:
revêtement d'une deuxième surface (9) après l'étape e, le revêtement de la deuxième surface (9) comprenant aussi les étapes de procédé a à e.

14. Module optique, comprenant un substrat (1) avec une première surface (5), et une couche (3) en silicone appliquée sur la première surface (5), un élément optique (4) étant formé à l'aide d'un procédé de coulage ouvert dans la couche (3) en silicone, une couche d'un promoteur d'adhérence (2) étant agencée entre la première surface (5) et la couche (3) en silicone, **caractérisé en ce, que** le silicone (3) soit ultrapur et contienne moins de 100 ppm de substances étrangères.

15. Module optique selon la revendication 14, fabriqué en outre selon l'une des revendications 1 à 13.

16. Lampe, comprenant un module optique selon la revendication 14 ou 15.

17. Utilisation d'une lampe selon la revendication 16 pour le séchage d'une couche, notamment dans un procédé d'impression.
